# EUROPEAN PATENT SPECIFICATION

(11) **EP 3 653 857 B1**
(45) Date of publication and mention of the grant of the patent: **29.09.2021**
(21) Application number: 18905111.3
(22) Date of filing: 16.04.2018
(51) Int. Cl.: F02B 75/22, F01P 3/20, F01M 1/02

(54) **V-TYPE 12-CYLINDER DIESEL ENGINE**
12-ZYLINDER-DIESELMOTOR VOM V-TYP
MOTEUR DIESEL À 12 CYLINDRES DU TYPE EN V

(30) Priority: 07.02.2018 CN 201810123071
(43) Date of publication of application: 20.05.2020
(73) Proprietor: Guangxi Yuchai Machinery Co., Ltd., Yulin, Guangxi 537005 (CN)
(72) Inventor: HUANG, Yongzhong, Yulin, Guangxi 537005 (CN); HUANG, Diyun, Yulin, Guangxi 537005 (CN); SHEN, Jie, Yulin, Guangxi 537005 (CN); LI, Wei, Yulin, Guangxi 537005 (CN)
(74) Representative: ip21 Ltd
(86) International application number: PCT/CN2018/083192
(87) International publication number: WO 2019/153496

(56) References cited:
- EP-A1- 1 514 016
- CN-A- 101 501 306
- CN-A- 106 224 094
- CN-A- 107 250 484
- GB-A- 2 099 981
- RU-U1- 175 618
- US-A- 1 676 418
- US-A- 3 014 554
- US-A- 3 782 357

## Description

The present application claims priority to Chinese Patent Application No. 201810123071.9, entitled "V-type 12-cylinder diesel engine", filed with the China National Intellectual Property Administration on February 07, 2018.

### Technical Field

The invention relates to the field of engines, in particular to a V-type 12-cylinder diesel engine.

### Background Art

High-power high-speed diesel engines are commonly used in generator stations, petrochemicals, high-speed light ships and warships. Basically, they are four-stroke engines, since high-power high-speed diesel engines require very high stand-alone power. Therefore, the requirement of load capacity is higher than that for general diesel engine, and the average effective pressure is up to 3MPa and the maximum detonation pressure is up to 20MPa for foreign advanced high speed diesel engine. Since high-power high-speed diesel engine has the characteristics of high power and large torque, its requirements for several important key systems are relatively high, such as cylinder assembly system, power system, diesel system, cooling system, lubricating system, etc. Prior art examples are for instance CN 106224094 A and GB 2099981 A.

The information disclosed in this Background section is intended merely to increase an understanding of the general background of the invention.

### Summary of the Invention

The invention aims to provide a V-type 12-cylinder diesel engine which has the advantages of compact body, high power and large torque.

To achieve the above object, the invention provides a V-type 12-cylinder diesel engine. The diesel engine includes a V-shaped cylinder block, twelve single cylinder heads, an diesel supply system, an air inlet system, a lubricating system and a cooling system. The cylinder block is provided with twelve cylinder holes arranged in a V shape in two rows, the angle between the two rows of the cylinder holes being 60 degree. Twelve sleeves corresponding to the number of the cylinder holes are casted on the V-shaped cylinder block outside the two rows of cylinder holes, respectively. The twelve single cylinder heads each is mounted at corresponding cylinder port of the V-shaped cylinder block. The diesel supply system includes a diesel tank, an diesel supply pipeline in fluid communication with the diesel tank, and twelve electric control unit pumps. The twelve electric control unit pumps are mounted in the corresponding sleeve, respectively, and each electric control unit pump is used for controlling diesel injection to each cylinder. The diesel supply pipeline has a left pipe and a right pipe that are connected with the twelve electric control unit pumps through a plurality of vertical high-pressure pipes. The air inlet system is used for supplying fresh air to the V-type 12-cylinder diesel engine. The lubricating system comprises an oil pan, a pre-diesel supply pump, an oil pump, an oil filter and an oil cooler. The oil pan is arranged at a bottom of the V-shaped cylinder block, the pre-diesel supply pump is arranged at a front side of the oil pan, the oil pump is arranged at a left lower position of a front end of the V-shaped cylinder block, and the oil filter and the oil cooler are both arranged at a left upper position of the front end of the V-shaped cylinder block. The cooling system comprises a high temperature water circulation loop used for cooling the V-shaped cylinder block and the twelve single cylinder heads, and a low temperature water circulation loop used for cooling the oil cooler. The low temperature water circulation loop comprises a rear row radiator and a low temperature water pump, and the high temperature water circulation loop comprises a front row radiator and a high temperature water pump.

In a preferred embodiment, a piston with a W-shaped combustion chamber is arranged in the two rows of cylinder holes of the V-shaped cylinder block. An inner oil cooling channel is formed inside the piston, and four annular grooves are formed in a circumferential wall of the piston.

In a preferred embodiment, the air inlet system comprises a left air inlet pipe, a right air inlet pipe, a left supercharger, a right supercharger, a left intercooler and a right intercooler. The left intercooler and the right intercooler are mounted on two sides above a rear end of the V-shaped cylinder block respectively, and the left supercharger and the right supercharger are correspondingly mounted above the left intercooler and the right intercooler and protrude out of a top of the V-shaped cylinder block. The left supercharger is connected with a left air filter, the right supercharger is connected with a right air filter, and the left air inlet pipe and the right air inlet pipe are respectively arranged at upper ends of two sides of the V-shaped cylinder block after being communicated with the left intercooler and the right intercooler.

In a preferred embodiment, the low temperature water pump is arranged at the front end of the V-shaped cylinder block close to an upper part of the oil pump, and the high temperature water pump is arranged at the front end of the V-shaped cylinder block close to an upper part of the diesel distributor. The low temperature water pump, the high temperature water pump, the oil pump and the diesel distributor surround a crankshaft belt pulley, and the crankshaft belt pulley drives the low temperature water pump and the high temperature water pump respectively. Coolant flowing through the V-shaped cylinder block and the twelve single cylinder heads entering the front row radiator through a water outlet main pipe, three thermostats connected in parallel being connected between the water outlet main pipe and the front row radiator. The thermostat is arranged at an upper right position of the front end of the V-shaped cylinder block, the thermostat is in communication with the front row radiator through a radiator water pipe, and the radiator water pipe is arranged at the top of the V-shaped cylinder block.

In a preferred embodiment, the low temperature water circulation loop includes a low temperature water distributor fixed in an front end of the V-shaped cylinder block close to an upper part of the crankshaft belt pulley, and low temperature cooling water in the low temperature water pump is distributed to the oil cooler, the left intercooler and the right intercooler through the low temperature water distributor..

In a preferred embodiment, the left intercooler and the right intercooler each has a rectangular housing, an inside of which is provided with an air circulation cavity, a coolant flow channel being arranged in the housing around the air circulation cavity. An additional housing is arranged on a front side of the rectangular housing, and an intermediate housing being arranged between the left intercooler and the right intercooler, two sides of the intermediate housing being respectively connected with inner side end faces of the additional housings of the left intercooler and the right intercooler. An circulation channel communicated with the coolant flow channels inside the left intercooler and the right intercooler is arranged in the additional housing and the intermediate housing, water inlet and water outlet of the circulation channel being arranged on a front end face of the intermediate housing, and the water inlet and the water outlet being communicated with the low temperature water distributor through a water pipe.

In a preferred embodiment, the diesel supply system further comprises a diesel distributor fixed at the front end of the V-shaped cylinder block. The diesel in the diesel tank is in communication with the left pipe and the right pipe through the diesel distributor, diesel filters being respectively connected into the left pipe and the right pipe, and the diesel filters on left and on right being respectively mounted on two sides of the V-shaped cylinder block.

In a preferred embodiment, the diesel supply system further comprises an diesel delivery pump and a diesel filter, wherein the diesel delivery pump is connected between the diesel tank and the diesel filter, the diesel filter is in communication with the left pipe and the right pipe, the diesel delivery pump is fixed at a lower right position of the front end of the V-shaped cylinder block, and the diesel filter is fixed at right of the V-shaped cylinder block.

In a preferred embodiment, the ratio of stroke of each cylinder to a diameter of the cylinder is 1.05 to 1.23.

In a preferred embodiment, the ratio of a center distance between two adjacent cylinders to a diameter of the cylinder is 1.25-1.4.

Compared with the prior art, the invention has the following beneficial effects: a V-shaped cylinder block, 12 single cylinder heads and a diesel supply system are arranged to realize double-side diesel supply, the air inlet system is equipped with two sets of supercharging intercoolers, such that the compressed air is cooled, the density of the compressed air is further improved, and the power and the performance of an engine are favorably improved. The cooling system adopts high temperature water and low temperature water for separate cooling, so that the high temperature components and low temperature components can be cooled in a classified manner, the air inlet temperature and the engine oil temperature can be reduced, the heat energy loss is reduced, and the engine becomes more oil saving. The requirements of high power and large torque of the V-type 12-cylinder diesel engine are met, and the engine body is more compact and strong.

### Brief Description of the Drawings

FIG. 1 is a schematic view showing the structure of a V-shaped cylinder block of a V-type 12-cylinder diesel engine according to an embodiment of the present invention;
FIG. 2 is a schematic view showing a structure in which a single cylinder head is arranged on the V-shaped cylinder block of the V-type 12-cylinder diesel engine according to an embodiment of the present invention;
FIG. 3 is a whole structural diagram of the V-type 12-cylinder diesel engine according to an embodiment of the present invention;
FIG. 4 is a structural diagram of an diesel supply pipeline in the V-type 12-cylinder diesel engine according to an embodiment of the present invention;
FIG. 5 is a structural diagram of another diesel supply pipeline in the V-type 12-cylinder diesel engine according to an embodiment of the present invention;
FIG. 6 is a principal diagram of a cooling system in the V-type 12-cylinder diesel engine according to an embodiment of the present invention;
FIG. 7 is a structural diagram of an intercooler in a V-type 12-cylinder diesel engine according to an embodiment of the present invention.

### Detailed Description of the Invention

Hereinafter, specific embodiments of the present invention will be described in detail with reference to the accompanying drawings, but it should be understood that the scope of the present invention is not limited to the specific embodiments.

Throughout the description and claims, unless the context clearly dictates otherwise, the word "comprise", or variations such as "include" or "including", will be understood to imply the inclusion of a stated element or component but not the exclusion of another element or component.

According to the V-type 12-cylinder diesel engine provided by the embodiment of the invention, in order to meet the requirements of high power and high torque of a high-power high-speed diesel engine, the V-type 12-cylinder diesel engine is improved in a cylinder assembly system, a power system, a fuel system, a cooling system and a lubricating system. The electronic control unit pump technology is adopted, the injection pressure is large, the fuel injection quantity can be accurately and dynamically adjusted, the diesel engine is guaranteed to be good in atomization, sufficient in combustion, good in transient speed regulation, strong in loading capacity, low in fuel consumption under the condition of different loads, and the lowest fuel consumption rate reaches 195 g/kWh. One electric control unit pump is adopted for one cylinder, the pressure at the pump end is large, the control is simple, an oil sprayer with large injection pressure is equipped, the atomization is good, the combustion is sufficient, the oil consumption is low, each single pump is provided with a correction code, and the consistency is ensured. The design of one cover per cylinder renders high strength of the cylinder cover. Separate cooling is adopted with high temperature water and low temperature water, while two intercoolers and an oil coolant are cooled by low temperature water, and the cylinder block and the cylinder cover are cooled by high temperature water. The diesel supply system, the air inlet system, the lubricating system and the cooling system are reasonably arranged on the machine body, so that the machine body is more compact while the strength is high, the power is high and the torque is large.

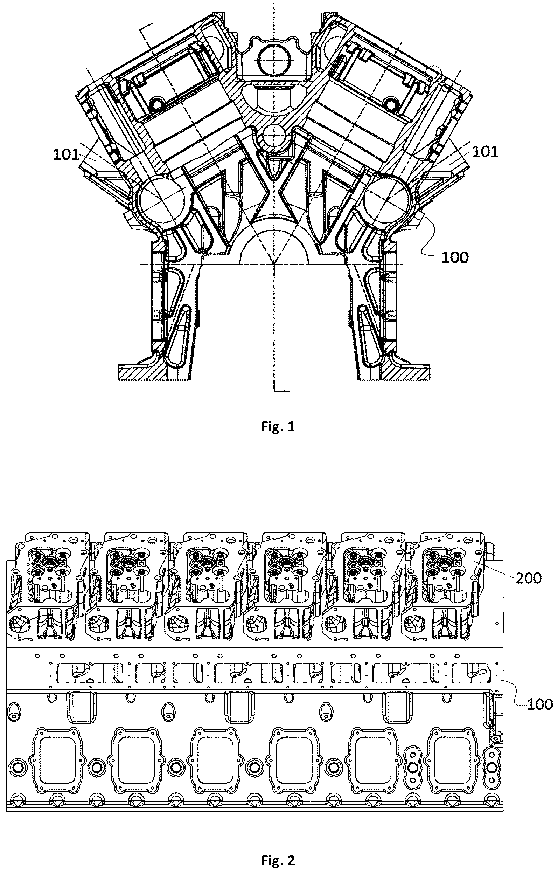

Specifically, as shown in FIGs. 1 to 3, a V-type 12-cylinder diesel engine according to an embodiment of the present invention includes a V-shaped cylinder block 100 provided with 12 cylinder holes arranged in a V shape in two rows, 12 single cylinder heads 200, a diesel supply system, an air inlet system, a lubricating system, and a cooling system. The included angle between two rows of cylinder holes of the V-shaped cylinder block 100 is 60 degrees, sleeves 101 corresponding to the number of the cylinder holes are respectively cast on the V-shaped cylinder block 100 on the outer sides of the two rows of cylinder holes, and twelve single cylinder heads 200 are respectively correspondingly mounted at a cylinder port part of the V-shaped cylinder block 100. The diesel supply system comprises 12 electric control unit pumps 14, a diesel tank and an diesel supply pipeline. Twelve electric control unit pumps 14 are correspondingly mounted in the sleeve 101 respectively, and the twelve electric control unit pumps 14 are respectively used for controlling the injection of diesel to each cylinder, with the diesel tank being communicated with the diesel supply pipeline. This embodiment provides two specific diesel supply pipelines (see below in detail). In general, the diesel supply pipeline comprises a left pipe and a right pipe, wherein the left pipe and the right pipe are respectively correspondingly connected with 12 electric control unit pumps through vertical high-pressure pipes. The air inlet system is used to supply fresh air to a V-type 12-cylinder diesel engine. The lubricating system comprises an oil pan, a pre-diesel supply pump 7, an oil pump 5, an oil filter 2 and an oil cooler 1, wherein the oil pan is arranged at a bottom of the V-shaped cylinder block 100. The pre-diesel supply pump 7 is provided at a front side of the oil pan, and the oil pump 5 is provided at a left lower position of a front end of the V-shaped cylinder block 100. The oil filter 2 and the oil cooler 1 are both provided at a left upper position of the front end of the V-shaped cylinder block 100. The cooling system comprises a high temperature water circulation loop and a low temperature water circulation loop. The low temperature water circulation loop comprises a rear row radiator and a low temperature water pump 4. The low temperature water circulation loop is used for cooling the oil cooler 1, the high temperature water circulation loop comprises a front row radiator and a high temperature water pump 9, and the high temperature water circulation loop is used for cooling the V-shaped cylinder block 100 and the 12 single cylinder heads.

As a preferred embodiment, a plurality of pistons having W combustion chambers are arranged in the two rows of cylinder holes of the V-shaped cylinder block 100. Inner cooling oil channels are formed in the pistons, and four annular grooves are formed in the circumferential wall of the pistons. In the embodiment, the W combustion chamber technology is adopted, the intake air amount is large, the mixing is uniform, the combustion is more sufficient, and the power range with low fuel consumption is wide. The piston adopts an inner cooling oil channel structure, which is good in cooling, has a four-ring groove structure and is good in sealing effect.

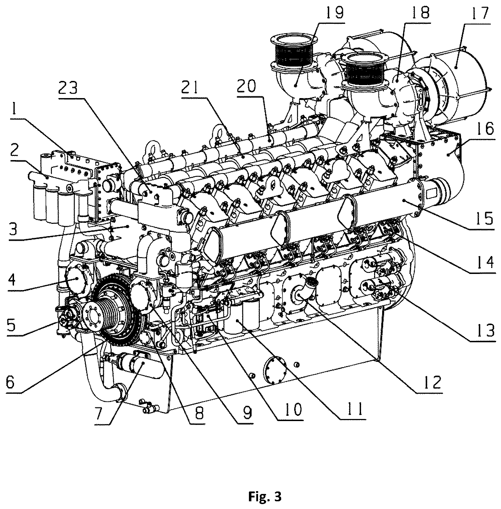

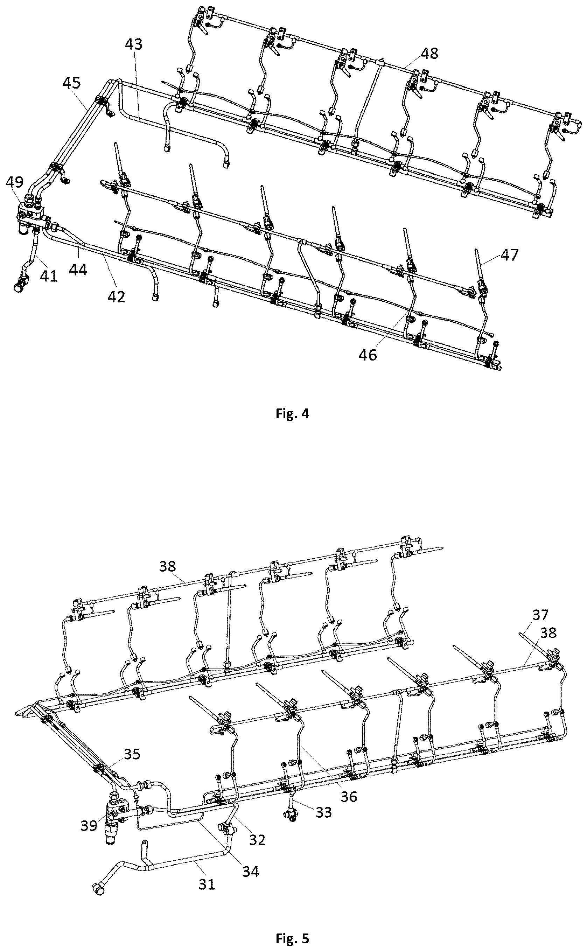

As shown in FIGs. 4 and 5, the present embodiment provides two specific diesel supply systems, and FIG. 4 shows one type of the diesel supply lines. In conjunction with FIG. 3, the diesel supply system includes twelve electric control unit pumps 14 for respectively controlling the injection of diesel into each cylinder, and includes a diesel tank and an diesel supply pipeline. The diesel tank communicates with an diesel supply pipeline including a left pipe 43 and a right pipe 42. The right pipe 42 and the left pipe 43 are correspondingly connected with 12 electric control unit pumps through a vertical high-pressure pipe 46, and the diesel supply system further comprises a diesel distributor 49 which is fixed at the front end of the V-shaped cylinder block 100. Diesel in the diesel tank is respectively communicated with the right pipe 42 and the left pipe 43 through a diesel distributor 49, diesel filters are respectively connected into the right pipe 42 and the left pipe 43, and the diesel filters on the left and the right are respectively mounted on two sides of the V-shaped cylinder block 100 (see figure 3, which shows the diesel filter 11 on the right). In the diesel supply pipeline, an diesel delivery pump 8 (see figure 3) pumps diesel into the diesel distributor 49 through an diesel delivery pipe 41. The diesel in the diesel distributor 49 is communicated with the right pipe 42 and the left pipe 43 in two branches, and with reference to Figure 4, the disconnected joints of the pipelines of the right pipe 42 and the left pipe 43 are connected into corresponding diesel filters. The right pipe 42 and the left pipe 43 are respectively connected with a corresponding electric control unit pump through an vertical high-pressure pipe 46 and a high-pressure connecting pipe 47, oil return of the electric control unit pump flows back into an overflow valve through a left oil return pipe 45 and a right oil return pipe 44, and the overflow valve is integrated in a diesel distributor 49. In addition, the high-pressure pipe 46 and the high-pressure connecting pipe 47 of the embodiment are fixed at positions close to the cylinder head on both sides of the V-shaped cylinder block 100 by brackets 48.

As shown in FIG. 5, which shows another type of diesel supply line of the present embodiment, in conjunction with FIG. 3, the diesel supply system further includes an diesel delivery pump 8 and a diesel filter 11. The diesel delivery pump 8 is connected between the diesel tank and the diesel filter 11, and diesel in the diesel tank is input into the diesel filter 11 through the diesel delivery pipe 31 by the diesel delivery pump 8. The diesel filter 11 has two outlets communicating with a left pipe 32 and a right pipe 33, respectively, and the diesel delivery pump 8 is fixed at a right lower position of the front end of the V-shaped cylinder block 100 (see FIG. 3). The diesel filter 11 is fixed to the right of the V-shaped cylinder block 100, and FIG. 3 shows a second type of diesel supply line. The left pipe 32 and the right pipe 33 are respectively correspondingly connected with the electric control unit pump through the vertical high-pressure pipe 36 and the high-pressure connecting pipe 37, and oil return of the electric control unit pump flows back into an overflow valve 39 through the left oil return pipe 35 and the right oil return pipe 34 respectively. In addition, a high-pressure pipe 36 and a high-pressure connection pipe 37 of the embodiment are fixed at positions close to the cylinder head on both sides of the V-shaped cylinder block 100 by brackets 38.

In a preferred embodiment, as shown in FIG. 3, the inlet pipe, supercharger, intercooler, air filter, and outlet pipe that appear in pairs are partially labeled in FIG. 3. The air inlet system comprises a left air inlet pipe, a right air inlet pipe 15, a left supercharger, a right supercharger 18, a left intercooler and a right intercooler 16. The left intercooler and the right intercooler 16 are mounted on two sides above the rear end of the V-shaped cylinder block 100 respectively, and the left supercharger and the right supercharger 18 are mounted above the left intercooler and the right intercooler 16 correspondingly and protrude out of the top of the V-shaped cylinder block 100. The left supercharger is connected with a left air filter, the right supercharger 18 is connected with a right air filter 17, and the left air inlet pipe and the right air inlet pipe 15 are arranged at the upper ends of two sides of the V-shaped cylinder block 100 after being respectively communicated with the left intercooler and the right intercooler 16. In addition, the left supercharger is provided with a rear vortex exhaust pipe 19, and the right supercharger 18 is also provided with a rear vortex exhaust pipe. In fact, the V-type 12-cylinder diesel engine further includes a corresponding exhaust system including exhaust pipes 21 (two, left and right) correspondingly connected to the left and right superchargers, the exhaust pipes 21 (two, left and right) being disposed at a top middle position of the V-shaped cylinder block 100.

In a preferred embodiment, the low temperature water pump 4 is arranged at the front end of the V-shaped cylinder block 100 close to an upper part of the oil pump 5, the high temperature water pump 9 is arranged at the front end of the V-shaped cylinder block 100, and the high temperature water pump 9 and the low temperature water pump 4 are respectively arranged at the two sides above a crankshaft belt pulley. The low temperature water pump 4, the high temperature water pump 9, the oil pump 5 and the diesel delivery pump 8 surround the crankshaft belt pulley (a silica gel damper 6 is arranged on the crankshaft belt pulley), and the crankshaft belt pulley drives both the low temperature water pump 4 and the high temperature water pump 9, and the coolant flowing through the V-shaped cylinder block 100 and the 12 single cylinder heads 200 enters a front row radiator 242 through a water outlet main pipe. Three thermostats 23 connected in parallel are connected between the water outlet main pipe and the front row radiator 242, while the thermostats 23 are arranged at the upper right position of the front end of the V-shaped cylinder block 100, and the thermostats 23 are communicated with the front row radiator 242 through a radiator water pipe 20. The radiator water pipe 20 is disposed at the top of the V-shaped cylinder block 100.

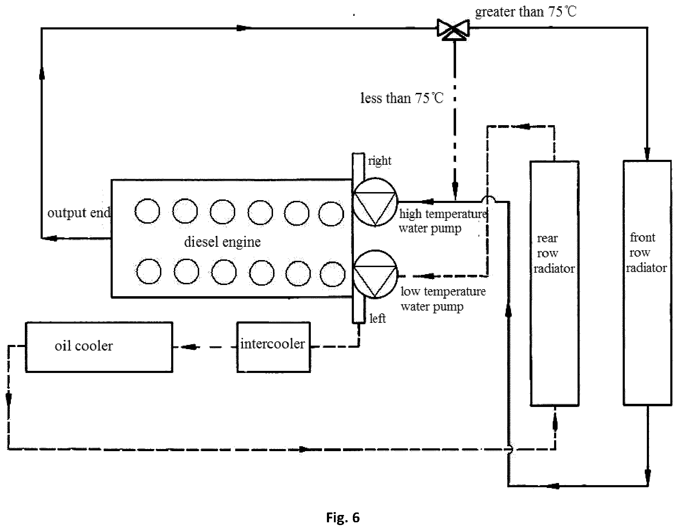

As shown in FIGs. 3 and 6, as a preferred embodiment, the low temperature water circulation loop includes a low temperature water distributor 3 fixed at a position at the front end of the V-shaped cylinder block 100 close to an upper part of the crankshaft belt pulley, and the low temperature water distributor 3 is provided so that the low temperature water circulation loop can simultaneously cool the oil cooler 1 and the two intercoolers. Thus, as shown in FIG. 6, the present embodiment proposes that high temperature water and low temperature water are adopted for separate cooling, while the two intercoolers and the oil cooler 1 are cooled by the low temperature water, and the cylinder block and the cylinder cover are cooled by the high temperature water. The cooling system belongs to a forced closed circulating water cooling system, and antifreeze and antirust coolant is adopted as the coolant. Separate cooling is conducted with high temperature water and low temperature water, wherein the low temperature water cools two intercoolers and the oil cooler, and the high temperature water cools the cylinder block and cylinder head. The outlet temperature of the high temperature water is controlled at 75-95 °C, and the temperature of the oil is preferably controlled at 80-110 °C. In the system, the water pump, fan, radiator and oil cooler are the main components of the cooling system. When the engine runs, the crankshaft timing gear drives the high temperature water pump and the low temperature water pump respectively through the left idle gear and the right idle gear to drive the water pump impeller to rotate, and the coolant generates a certain pressure under the action of centrifugal force of the water pump and flows out from the outlet of the water pump. Coolant extruded by the high temperature water pump enters the cooling water jacket of the cylinder block and the cylinder cover, and the coolant flows to the water outlet main pipe after cooling the cylinder block and the cylinder cover and flows into the radiator after passing through the thermostat. The thermostat is arranged at the end of the water outlet pipe, and the thermostat automatically controls the temperature function. When the temperature of the coolant is greater than 75 °C, the thermostat is started, and when the temperature of the coolant is greater than 85 °C, the thermostat is fully opened, at which moment the coolant completely enters the radiator and flows back to the water pump. If the temperature of the coolant is less than 75 °C, the coolant does not need to be cooled by heat dissipation of the radiator and directly flows to the water pump to carry out cooling circulation again. The low temperature water pump cools the two intercoolers and the oil cooler, and then returns to the radiator for heat dissipation. Due to the classified cooling of the high temperature components and low temperature components, the inlet air temperature and the oil temperature can be reduced, meanwhile, the heat energy loss is reduced, and the engine saves more oil.

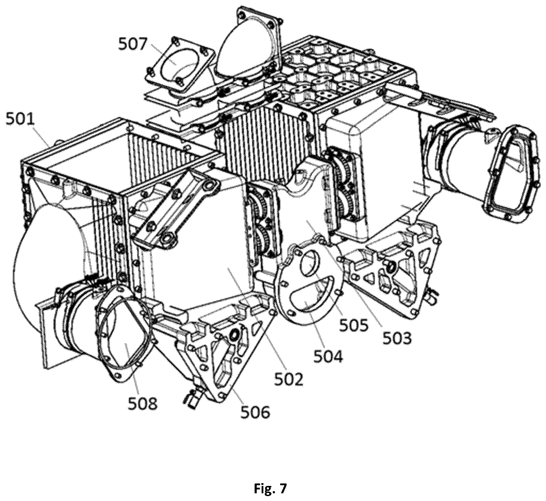

As shown in FIG. 7, as a preferred embodiment, this embodiment proposes a specific intercooler structure in which the left intercooler and the right intercooler are square housings 501. An air circulation cavity is formed inside the square housing 501, and a coolant flow channel is formed in the square housing around the air circulation cavity. An additional housing 502 is provided at a front side of the square housing 501, an intermediate housing 503 is provided between the left intercooler and the right intercooler, and both sides of the intermediate housing 503 are connected with inner side end faces of the additional housings 502 of the left intercooler and the right intercooler, respectively. The additional housing 502 and the intermediate housing 503 are internally provided with a circulation channel communicating with the coolant flow channel inside the left intercooler and the right intercooler. A water inlet 504 and a water outlet 505 of the circulation channel are provided on a front end face of the intermediate housing 503, the water inlet 504 and the water outlet 505 are communicated with the low temperature water distributor through a water pipe, so that the low temperature cooling water from the low temperature water pump 4 is distributed to the oil cooler 1, the left intercooler and the right intercooler 16 through the low temperature water distributor 3.

In the embodiments described above, existing exhaust gas turbocharging techniques are adopted. A set of independent supercharging and intercooling systems are arranged on left and right respectively. When the supercharged engine works, the exhaust gas from the exhaust pipe of the engine enters the turbine, and the heat energy in the exhaust gas pressure enables the turbine to rotate and enables the compressor coaxial with the turbine to rotate. Air is drawn in and compressed by the compressor, and then enters the inlet pipe of the engine through a duct, and the cooled and expanded exhaust gas exiting the turbine is directed by the turbine housing to the engine exhaust system and into the atmosphere. After the intake air is compressed, the density of the air charged into the cylinder is improved, more fuel can be fully combusted with good cooperation of the diesel supply system, the power is increased, and the economy is improved.

In addition, the right portion of the V-shaped cylinder block 100 of the present embodiment is further provided with an ECU 10, an oil port 12, and a starter motor 13.

As a preferred embodiment, the V-type 12-cylinder diesel engine has a stroke-to-diameter ratio of 1.05-1.23. In the present embodiment, the height, the width and the weight of the diesel engine can be reduced by selecting a small stroke-to-cylinder diameter ratio, the rotating speed of the diesel engine can be increased, and the power of the diesel engine is improved.

As a preferred embodiment, the ratio of a center distance between two adjacent cylinders to a diameter of the cylinder is 1.25-1.4. Accordingly, the length of the diesel engine is more compact, the strengthening degree of the diesel engine is higher, and the rigidity of the crankshaft and the body is stronger. Due to the fact that the length of the crankshaft is shortened, the torsional rigidity is enhanced, the natural vibration circle frequency of the shafting is improved, and the torsional vibration performance is improved.

In summary, according to the V-type 12-cylinder diesel engine of the embodiment, through providing the V-shaped cylinder block 100 and the 12 single cylinder heads 200, the diesel supply system is realized with double-side diesel supply, the air intake system is equipped with two sets of supercharged intercoolers, the compressed air is cooled, and the density of the compressed air is further improved, which facilitates the situation that the power of the engine is increased and the performance is improved. The cooling system adopts separate cooling with high temperature water and low temperature water, and accordingly a classified cooling of high temperature and low temperature components. Air inlet temperature and oil temperature can be reduced, heat energy loss is reduced, the engine is more oil-saving, the requirements of high power and large torque of a high-power high-speed diesel engine are met, and the engine body is more compact and strong.

The foregoing description of specific exemplary embodiments of the present invention has been presented for purposes of illustration and example. These descriptions are not intended to limit the invention to the precise forms disclosed, and obviously many modifications and variations are possible in light of the above teachings. The exemplary embodiments were chosen and described in order to explain the certain principles of the invention and its practical application to thereby enable a person skilled in the art to make and use various exemplary embodiments and various alternatives and modifications of the present invention. It is intended that the scope of the invention be defined by the claims.

## Claims

1. A V-type 12-cylinder diesel engine, comprising:
a V-shaped cylinder block (100) provided with twelve cylinder holes arranged in a V shape in two rows, the angle between the two rows of the cylinder holes being 60 degrees, wherein twelve sleeves (101) corresponding to the number of the cylinder holes are casted on the V-shaped cylinder block outside the two rows of cylinder holes, respectively;
twelve single cylinder heads (200) each mounted at corresponding cylinder port of the V-shaped cylinder block;
an diesel supply system including a diesel tank, an diesel supply pipeline in fluid communication with the diesel tank, and twelve electric control unit pumps (14), wherein the twelve electric control unit pumps are mounted in the corresponding sleeve, respectively, each electric control unit pump being used for controlling diesel injection to each cylinder, and wherein the diesel supply pipeline comprises a left pipe and a right pipe that are connected with the twelve electric control unit pumps through a plurality of vertical high-pressure pipes (46);
an air inlet system used for supplying fresh air to the V-type 12-cylinder diesel engine;
a lubricating system comprising an oil pan, a pre-diesel supply pump (7), an oil pump (5), an oil filter (2) and an oil cooler (1), wherein the oil pan is arranged at a bottom of the V-shaped cylinder block, the pre-diesel supply pump is arranged at a front side of the oil pan, the oil pump is arranged at a left lower position of a front end of the V-shaped cylinder block, and the oil filter and the oil cooler are both arranged at a left upper position of the front end of the V-shaped cylinder block; and
a cooling system comprising a high temperature water circulation loop used for cooling the V-shaped cylinder block and the twelve single cylinder heads, and a low temperature water circulation loop used for cooling the oil cooler, wherein the low temperature water circulation loop comprises a rear row radiator and a low temperature water pump (4), and the high temperature water circulation loop comprises a front row radiator and a high temperature water pump (9).

2. The V-type 12-cylinder diesel engine according to claim 1, wherein a piston with a W-shaped combustion chamber is arranged in the two rows of cylinder holes of the V-shaped cylinder block, an inner oil cooling channel being formed inside the piston, and four annular grooves being formed in a circumferential wall of the piston.

3. The V-type 12-cylinder diesel engine according to claim 1, wherein the air inlet system comprises a left air inlet pipe, a right air inlet pipe, a left supercharger, a right supercharger, a left intercooler and a right intercooler, wherein the left intercooler and the right intercooler are mounted on two sides above a rear end of the V-shaped cylinder block respectively, and the left supercharger and the right supercharger are correspondingly mounted above the left intercooler and the right intercooler and protrude out of a top of the V-shaped cylinder block, the left supercharger being connected with a left air filter, the right supercharger being connected with a right air filter, and the left air inlet pipe and the right air inlet pipe being respectively arranged at upper ends of two sides of the V-shaped cylinder block after being communicated with the left intercooler and the right intercooler.

4. The V-type 12-cylinder diesel engine according to claim 3,
wherein the diesel supply system further comprises a diesel distributor fixed at the front end of the V-shaped cylinder block, diesel in the diesel tank being communicated with the right oil pipe and the left oil pipe through the diesel distributor,
wherein the low temperature water pump is arranged at the front end of the V-shaped cylinder block close to an upper part of the oil pump, the high temperature water pump is arranged at the front end of the V-shaped cylinder block close to an upper part of the diesel distributor, the low temperature water pump, the high temperature water pump, the oil pump and the diesel distributor surround a crankshaft belt pulley, and the crankshaft belt pulley drives the low temperature water pump and the high temperature water pump respectively,
wherein coolant flowing through the V-shaped cylinder block and the twelve single cylinder heads entering the front row radiator through a water outlet main pipe, three thermostats connected in parallel being connected between the water outlet main pipe and the front row radiator, and
wherein the thermostat is arranged at an upper right position of the front end of the V-shaped cylinder block, the thermostat is in communication with the front row radiator through a radiator water pipe, and the radiator water pipe is arranged at the top of the V-shaped cylinder block.

5. The V-type 12-cylinder diesel engine according to claim 4, wherein the low temperature water circulation loop includes a low temperature water distributor fixed in an front end of the V-shaped cylinder block close to an upper part of the crankshaft belt pulley, and low temperature cooling water in the low temperature water pump is distributed to the oil cooler, the left intercooler and the right intercooler through the low temperature water distributor..

6. The V-type 12-cylinder diesel engine according to claim 5, wherein the left intercooler and the right intercooler each has a rectangular housing, an inside of which is provided with an air circulation cavity, a coolant flow channel being arranged in the housing around the air circulation cavity,
wherein an additional housing is arranged on a front side of the rectangular housing, and an intermediate housing being arranged between the left intercooler and the right intercooler, two sides of the intermediate housing being respectively connected with inner side end faces of the additional housings of the left intercooler and the right intercooler, and
wherein an circulation channel communicated with the coolant flow channels inside the left intercooler and the right intercooler is arranged in the additional housing and the intermediate housing, water inlet and water outlet of the circulation channel being arranged on a front end face of the intermediate housing, and the water inlet and the water outlet being communicated with the low temperature water distributor through a water pipe.

7. The V-type 12-cylinder diesel engine according to claim 1,
wherein the diesel supply system further comprises a diesel distributor fixed at the front end of the V-shaped cylinder block,
wherein diesel in the diesel tank is in communication with the left pipe and the right pipe through the diesel distributor, diesel filters being respectively connected into the left pipe and the right pipe, and the diesel filters on left and on right being respectively mounted on two sides of the V-shaped cylinder block.

8. The V-type 12-cylinder diesel engine according to claim 1, wherein the diesel supply system further comprises an diesel delivery pump and a diesel filter, wherein the diesel delivery pump is connected between the diesel tank and the diesel filter, the diesel filter is in communication with the left pipe and the right pipe, the diesel delivery pump is fixed at a lower right position of the front end of the V-shaped cylinder block, and the diesel filter is fixed at right of the V-shaped cylinder block.

9. The V-type 12-cylinder diesel engine according to claim 1, wherein the ratio of a stroke of each cylinder to a diameter of the cylinder is 1.05 to 1.23.

10. The V-type 12-cylinder diesel engine according to claim 1, wherein the ratio of a center distance between two adjacent cylinders to a diameter of the cylinder is 1.25-1.4.

## Patentansprüche

1. Ein 12-Zylinder-Dieselmotor vom V-Typ, bestehend aus:
einen V-förmigen Zylinderblock (100), der mit zwölf Zylinderlöchern versehen ist, die in einer V-Form in zwei Reihen angeordnet sind, wobei der Winkel zwischen den beiden Reihen der Zylinderlöcher 60 Grad beträgt, wobei zwölf Hülsen (101), die der Anzahl der Zylinderlöcher entsprechen, auf dem V-förmigen Zylinderblock außerhalb der beiden Reihen der Zylinderlöcher gegossen sind;
zwölf einzelne Zylinderköpfe (200), die jeweils an der entsprechenden Zylinderöffnung des V-förmigen Zylinderblocks angebracht sind;
ein Dieselversorgungssystem, das einen Dieseltank, eine Dieselversorgungsleitung in Fluidverbindung mit dem Dieseltank und zwölf elektrische Steuereinheitspumpen (14) enthält, wobei die zwölf elektrischen Steuereinheitspumpen jeweils in der entsprechenden Hülse angebracht sind, wobei jede elektrische Steuereinheitspumpe zur Steuerung der Dieseleinspritzung in jeden Zylinder verwendet wird, und wobei die Dieselversorgungsleitung eine linke Leitung und eine rechte Leitung umfasst, die mit den zwölf elektrischen Steuereinheitspumpen durch eine Mehrzahl von vertikalen Hochdruckleitungen (46) verbunden sind;
ein Lufteinlasssystem, das der Frischluftzufuhr des 12-Zylinder-Dieselmotors vom Typ V dient;
ein Schmiersystem mit einer Ölwanne, einer Vordieselversorgungspumpe (7), einer Ölpumpe (5), einem Ölfilter und einem Ölkühler (1),
wobei die Ölwanne an einem Boden des V-förmigen Zylinderblocks angeordnet ist, die Vordieselversorgungspumpe an einer Vorderseite der Ölwanne angeordnet ist, die Ölpumpe an einer linken unteren Position eines vorderen Endes des V-förmigen Zylinderblocks angeordnet ist und der Ölfilter und der Ölkühler beide an einer linken oberen Position des vorderen Endes des V-förmigen Zylinderblocks angeordnet sind; und
ein Kühlsystem, das einen Hochtemperatur-Wasserzirkulationskreislauf, der zur Kühlung des V-förmigen Zylinderblocks und der zwölf einzelnen Zylinderköpfe verwendet wird, und einen Niedertemperatur-Wasserzirkulationskreislauf, der zur Kühlung des Ölkühlers verwendet wird, umfasst, wobei der Niedertemperatur-Wasserzirkulationskreislauf einen Kühler in der hinteren Reihe und eine Niedertemperatur-Wasserpumpe (4) umfasst,
und der Hochtemperatur-Wasserkreislauf umfasst einen Kühler in der vorderen Reihe und eine Hochtemperatur-Wasserpumpe (9).

2. 12-Zylinder-Dieselmotor vom V-Typ nach Anspruch 1, wobei ein Kolben mit einem W-förmigen Brennraum in den zwei Reihen von Zylinderbohrungen des V-förmigen Zylinderblocks angeordnet ist, wobei ein innerer Ölkühlkanal im Inneren des Kolbens ausgebildet ist und vier ringförmige Nuten in einer Umfangswand des Kolbens ausgebildet sind.

3. 12-Zylinder-Dieselmotor vom V-Typ nach Anspruch 1, wobei das Lufteinlasssystem ein linkes Lufteinlassrohr, ein rechtes Lufteinlassrohr, einen linken Lader, einen rechten Lader, einen linken Ladeluftkühler und einen rechten Ladeluftkühler umfasst, wobei der linke Ladeluftkühler und der rechte Ladeluftkühler an zwei Seiten über einem hinteren Ende des V-förmigen Zylinderblocks angebracht sind, und der linke Lader und der rechte Lader entsprechend über dem linken Ladeluftkühler und dem rechten Ladeluftkühler angebracht sind und aus einer Oberseite des V-förmigen Zylinderblocks herausragen, wobei der linke Lader mit einem linken Luftfilter verbunden ist, der rechte Lader mit einem rechten Luftfilter verbunden ist und das linke Lufteinlassrohr und das rechte Lufteinlassrohr jeweils an oberen Enden von zwei Seiten des V-förmigen Zylinderblocks angeordnet sind, nachdem sie mit dem linken Ladeluftkühler und dem rechten Ladeluftkühler in Verbindung stehen.

4. 12-Zylinder-Dieselmotor vom V-Typ nach Anspruch 3,
wobei das Dieselversorgungssystem ferner einen Dieselverteiler umfasst, der am vorderen Ende des V-förmigen Zylinderblocks befestigt ist, wobei Diesel in dem Dieseltank durch den Dieselverteiler mit der rechten Ölleitung und der linken Ölleitung in Verbindung gebracht wird,
wobei die Niedertemperatur-Wasserpumpe am vorderen Ende des V-förmigen Zylinderblocks in der Nähe eines oberen Teils der Ölpumpe angeordnet ist, die Hochtemperatur-Wasserpumpe am vorderen Ende des V-förmigen Zylinderblocks in der Nähe eines oberen Teils des Dieselverteilers angeordnet ist, die Niedertemperatur-Wasserpumpe, die Hochtemperatur-Wasserpumpe, die Ölpumpe und der Dieselverteiler eine Kurbelwellenriemenscheibe umgeben, und die Kurbelwellenriemenscheibe die Niedertemperatur-Wasserpumpe bzw. die Hochtemperatur-Wasserpumpe antreibt,
wobei das durch den V-förmigen Zylinderblock und die zwölf Einzelzylinderköpfe fließende Kühlmittel durch ein Wasserauslass-Hauptrohr in den Kühler in der vorderen Reihe eintritt, wobei drei parallel geschaltete Thermostate zwischen dem Wasserauslass-Hauptrohr und dem vorderen Reihenkühler angeschlossen sind, und
wobei der Thermostat an einer oberen rechten Position des vorderen Endes des V-förmigen Zylinderblocks angeordnet ist, der Thermostat durch ein Kühlerwasserrohr mit dem Kühler der vorderen Reihe in Verbindung steht und das Kühlerwasserrohr an der Oberseite des V-förmigen Zylinderblocks angeordnet ist.

5. 12-Zylinder-Dieselmotor vom V-Typ nach Anspruch 4, wobei der Niedertemperatur-Wasserzirkulationskreislauf einen Niedertemperatur-Wasserverteiler umfasst, der an einem vorderen Ende des V-förmigen Zylinderblocks in der Nähe eines oberen Teils der Kurbelwellenriemenscheibe befestigt ist, und Niedertemperatur-Kühlwasser in der Niedertemperatur-Wasserpumpe durch den Niedertemperatur-Wasserverteiler an den Ölkühler, den linken Ladeluftkühler und den rechten Ladeluftkühler verteilt wird.

6. 12-Zylinder-Dieselmotor vom V-Typ nach Anspruch 5, wobei der linke Ladeluftkühler und der rechte Ladeluftkühler jeweils ein rechteckiges Gehäuse aufweisen, dessen Innenseite mit einem Luftzirkulationshohlraum versehen ist, wobei in dem Gehäuse um den Luftzirkulationshohlraum ein Kühlmittel strömungskanal angeordnet ist,
wobei ein zusätzliches Gehäuse an einer Vorderseite des rechteckigen Gehäuses angeordnet ist, und ein Zwischengehäuse zwischen dem linken Ladeluftkühler und dem rechten Ladeluftkühler angeordnet ist, wobei zwei Seiten des Zwischengehäuses jeweils mit inneren Seitenendflächen der zusätzlichen Gehäuse des linken Ladeluftkühlers und des rechten Ladeluftkühlers verbunden sind, und
wobei ein Zirkulationskanal, der mit den Kühlmittelströmungskanälen innerhalb des linken Ladeluftkühlers und des rechten Ladeluftkühlers in Verbindung steht, in dem zusätzlichen Gehäuse und dem Zwischengehäuse angeordnet ist, wobei der Wassereinlass und der Wasserauslass des Zirkulationskanals an einer vorderen Endfläche des Zwischengehäuses angeordnet sind und der Wassereinlass und der Wasserauslass mit dem Niedertemperatur-Wasserverteiler durch ein Wasserrohr in Verbindung stehen.

7. 12-Zylinder-Dieselmotor vom V-Typ nach Anspruch 1,
wobei das Dieselversorgungssystem ferner einen Dieselverteiler umfasst, der am vorderen Ende des V-förmigen Zylinderblocks befestigt ist,
wobei Diesel in dem Dieseltank durch den Dieselverteiler mit der linken Leitung und der rechten Leitung in Verbindung steht, wobei Dieselfilter jeweils in die linke Leitung und die rechte Leitung angeschlossen sind, und wobei die Dieselfilter links und rechts jeweils an zwei Seiten des V-förmigen Zylinderblocks angebracht sind.

8. 12-Zylinder-Dieselmotor vom V-Typ nach Anspruch 1, wobei das Dieselversorgungssystem ferner eine Dieselförderpumpe und einen Dieselfilter umfasst, wobei die Dieselförderpumpe zwischen dem Dieseltank und dem Dieselfilter angeschlossen ist, der Dieselfilter mit der linken Leitung und der rechten Leitung in Verbindung steht, die Dieselförderpumpe an einer unteren rechten Position des vorderen Endes des V-förmigen Zylinderblocks befestigt ist und der Dieselfilter an der rechten Seite des V-förmigen Zylinderblocks befestigt ist.

9. 12-Zylinder-Dieselmotor vom V-Typ nach Anspruch 1, wobei das Verhältnis zwischen einem Hub jedes Zylinders und einem Durchmesser des Zylinders 1,05 bis 1,23 beträgt.

10. 12-Zylinder-Dieselmotor des V-Typs nach Anspruch 1, wobei das Verhältnis eines Achsabstands zwischen zwei benachbarten Zylindern und einem Durchmesser des Zylinders 1,25-1,4 beträgt.

## Revendications

1. Un moteur diesel à 12 cylindres de type V, comprenant :
un bloc-cylindres en forme de V (100) pourvu de douze trous de cylindre disposés en forme de V en deux rangées, l'angle entre les deux rangées de trous de cylindre étant de 60 degrés, dans lequel douze manchons (101) correspondant au nombre de trous de cylindre sont moulés sur le bloc-cylindres en forme de V à l'extérieur des deux rangées de trous de cylindre, respectivement ;
douze culasses simples (200), chacune étant montée sur l'orifice correspondant du bloc-cylindres en forme de V ;
un système d'alimentation en diesel comprenant un réservoir de diesel, une canalisation d'alimentation en diesel en communication fluidique avec le réservoir de diesel, et douze pompes électriques à unité de commande (14), dans lequel les douze pompes électriques à unité de commande sont montées dans le manchon correspondant, respectivement, chaque pompe électrique à unité de commande étant utilisée pour commander l'injection de diesel dans chaque cylindre, et dans lequel la canalisation d'alimentation en diesel comprend un tuyau gauche et un tuyau droit qui sont reliés aux douze pompes électriques à unité de commande par une pluralité de tuyaux verticaux à haute pression (46) ;
un système d'admission d'air utilisé pour alimenter en air frais le moteur diesel à 12 cylindres de type V ;
un système de lubrification comprenant un carter d'huile, une pompe d'alimentation en pré-diesel (7), une pompe à huile (5), un filtre à huile et un refroidisseur d'huile (1),
dans lequel le carter d'huile est disposé au fond du bloc-cylindres en forme de V, la pompe d'alimentation en pré-diesel est disposée sur un côté avant du carter d'huile, la pompe à huile est disposée dans une position inférieure gauche d'une extrémité avant du bloc-cylindres en forme de V, et le filtre à huile et le refroidisseur d'huile sont tous deux disposés à une position supérieure gauche de l'extrémité avant du bloc-cylindres en forme de V ; et
un système de refroidissement comprenant une boucle de circulation d'eau à haute température utilisée pour refroidir le bloc-cylindres en forme de V et les douze culasses simples, et une boucle de circulation d'eau à basse température utilisée pour refroidir le refroidisseur d'huile, dans lequel la boucle de circulation d'eau à basse température comprend un radiateur de rangée arrière et une pompe à eau à basse température (4), et la boucle de circulation d'eau à haute température comprend un radiateur de rangée avant et une pompe à eau à haute température (9).

2. Moteur diesel à 12 cylindres de type V selon la revendication 1, dans lequel un piston avec une chambre de combustion en forme de W est disposé dans les deux rangées de trous de cylindre du bloc-cylindres en forme de V, un canal de refroidissement d'huile interne étant formé à l'intérieur du piston, et quatre rainures annulaires étant formées dans une paroi circonférentielle du piston.

3. Moteur diesel à 12 cylindres de type V selon la revendication 1, dans lequel le système d'admission d'air comprend un tuyau d'admission d'air gauche, un tuyau d'admission d'air droit, un compresseur de suralimentation gauche, un compresseur de suralimentation droit, un refroidisseur intermédiaire gauche et un refroidisseur intermédiaire droit, dans lequel le refroidisseur intermédiaire gauche et le refroidisseur intermédiaire droit sont montés sur deux côtés au-dessus d'une extrémité arrière du bloc-cylindres en forme de V respectivement, et le compresseur de suralimentation gauche et le compresseur de suralimentation droit sont montés de manière correspondante au-dessus du refroidisseur intermédiaire gauche et du refroidisseur intermédiaire droit et font saillie hors d'un sommet du bloc-cylindres en forme de V, le compresseur de suralimentation gauche étant relié à un filtre à air gauche, le compresseur de suralimentation droit étant relié à un filtre à air droit, et le tuyau d'entrée d'air gauche et le tuyau d'entrée d'air droit étant respectivement agencés aux extrémités supérieures de deux côtés du bloc-cylindres en forme de V après avoir été mis en communication avec le refroidisseur intermédiaire gauche et le refroidisseur intermédiaire droit.

4. Moteur diesel à 12 cylindres de type V selon la revendication 3,
dans lequel le système d'alimentation en diesel comprend en outre un distributeur de diesel fixé à l'extrémité avant du bloc-cylindres en forme de V, le diesel dans le réservoir de diesel étant mis en communication avec le tuyau d'huile droit et le tuyau d'huile gauche par l'intermédiaire du distributeur de diesel,
dans lequel la pompe à eau basse température est disposée à l'extrémité avant du bloc-cylindres en forme de V près d'une partie supérieure de la pompe à huile, la pompe à eau haute température est disposée à l'extrémité avant du bloc-cylindres en forme de V près d'une partie supérieure du distributeur diesel, la pompe à eau basse température, la pompe à eau haute température, la pompe à huile et le distributeur diesel entourent une poulie à courroie de vilebrequin, et la poulie à courroie de vilebrequin entraîne la pompe à eau basse température et la pompe à eau haute température respectivement,
dans lequel le liquide de refroidissement s'écoulant à travers le bloc-cylindres en forme de V et les douze culasses uniques entre dans le radiateur de rangée avant par un tuyau principal de sortie d'eau, trois thermostats connectés en parallèle étant connectés entre le tuyau principal de sortie d'eau et le radiateur de rangée avant, et
dans lequel le thermostat est disposé à une position supérieure droite de l'extrémité avant du bloc-cylindres en forme de V, le thermostat est en communication avec le radiateur de rangée avant par l'intermédiaire d'un tuyau d'eau de radiateur, et le tuyau d'eau de radiateur est disposé au sommet du bloc-cylindres en forme de V.

5. Moteur diesel à 12 cylindres de type V selon la revendication 4, dans lequel la boucle de circulation d'eau à basse température comprend un distributeur d'eau à basse température fixé dans une extrémité avant du bloc-cylindres en forme de V près d'une partie supérieure de la poulie de courroie du vilebrequin, et l'eau de refroidissement à basse température dans la pompe à eau à basse température est distribuée au refroidisseur d'huile, au refroidisseur intermédiaire gauche et au refroidisseur intermédiaire droit par le distributeur d'eau à basse température.

6. Moteur diesel à 12 cylindres de type V selon la revendication 5, dans lequel le refroidisseur intermédiaire gauche et le refroidisseur intermédiaire droit ont chacun un boîtier rectangulaire, dont l'intérieur est pourvu d'une cavité de circulation d'air, un canal d'écoulement de réfrigérant étant disposé dans le boîtier autour de la cavité de circulation d'air,
dans lequel un boîtier supplémentaire est disposé sur un côté avant du boîtier rectangulaire, et un boîtier intermédiaire étant disposé entre le refroidisseur intermédiaire gauche et le refroidisseur intermédiaire droit, deux côtés du boîtier intermédiaire étant respectivement reliés aux faces d'extrémité du côté intérieur des boîtiers supplémentaires du refroidisseur intermédiaire gauche et du refroidisseur intermédiaire droit, et
dans lequel un canal de circulation communiquant avec les canaux d'écoulement de liquide de refroidissement à l'intérieur du refroidisseur intermédiaire gauche et du refroidisseur intermédiaire droit est disposé dans le boîtier supplémentaire et le boîtier intermédiaire, l'entrée d'eau et la sortie d'eau du canal de circulation étant disposées sur une face d'extrémité avant du boîtier intermédiaire, et l'entrée d'eau et la sortie d'eau communiquant avec le distributeur d'eau à basse température par un tuyau d'eau.

7. Moteur diesel à 12 cylindres de type V selon la revendication 1,
dans lequel le système d'alimentation en diesel comprend en outre un distributeur de diesel fixé à l'extrémité avant du bloc-cylindres en forme de V,
dans lequel le diesel dans le réservoir de diesel est en communication avec le tuyau gauche et le tuyau droit par l'intermédiaire du distributeur de diesel, les filtres de diesel étant respectivement connectés dans le tuyau gauche et le tuyau droit, et les filtres diesel à gauche et à droite étant respectivement montés sur deux côtés du bloc-cylindres en forme de V.

8. Moteur diesel à 12 cylindres de type V selon la revendication 1, dans lequel le système d'alimentation en diesel comprend en outre une pompe d'alimentation en diesel et un filtre diesel, dans lequel la pompe d'alimentation en diesel est connectée entre le réservoir de diesel et le filtre diesel, le filtre diesel est en communication avec le tuyau gauche et le tuyau droit, la pompe d'alimentation en diesel est fixée à une position inférieure droite de l'extrémité avant du bloc-cylindres en forme de V, et le filtre diesel est fixé à droite du bloc-cylindres en forme de V.

9. Moteur diesel à 12 cylindres de type V selon la revendication 1, dans lequel le rapport entre une course de chaque cylindre et un diamètre du cylindre est de 1,05 à 1,23.

10. Moteur diesel à 12 cylindres de type V selon la revendication 1, dans lequel le rapport entre un entraxe de deux cylindres adjacents et un diamètre du cylindre est de 1,25 à 1,4.
